Europäisches Patentamt

European Patent Office

Office européen des brevets

(19)

(11) Numéro de publication : **0 313 480 B1**

(12)

# FASCICULE DE BREVET EUROPEEN

(45) Date de publication du fascicule du brevet :
**06.05.92 Bulletin 92/19**

(51) Int. Cl.⁵ : **C01B 31/36, B01J 27/224,**
**B01D 53/36, C07C 2/84,**
**C10G 49/02**

(21) Numéro de dépôt : **88420352.2**

(22) Date de dépôt : **17.10.88**

(54) **Procédé de production de carbure de silicium à grande surface spécifique et application à des réactions catalytiques àtemperature élevée.**

(30) Priorité : **19.10.87 FR 8714742**
**29.01.88 FR 8801399**
**30.03.88 FR 8804727**

(43) Date de publication de la demande :
**26.04.89 Bulletin 89/17**

(45) Mention de la délivrance du brevet :
**06.05.92 Bulletin 92/19**

(84) Etats contractants désignés :
**AT BE CH DE ES FR GB GR IT LI NL SE**

(56) Documents cités :
**GB-A- 2 017 667**
**PATENT ABSTRACTS OF JAPAN, vol. 4, no. 2,**
**9 janvier 1980, page 57 C 69; JP-A-54 136 600**
**(SHOWA DENKO K.K.) 23-10-1979**
**PROCEEDINGS OF THE BRITISH CERAMIC**
**SOCIETY, mai 1983, no. 33, pages 1-15, British**
**Ceramic Society, Stoke-on-Brent, Shelton,GB;**
**P. KENNEDY et al.: "The production of fine**
**silicon carbide powder by the reaction of**
**gaseous silicon monoxide with particulatecar-**
**bon"**

(73) Titulaire : **PECHINEY ELECTROMETALLURGIE**
**Tour Manhattan La Défense 2 6 Place de l'Iris**
**F-92400 Courbevoie (FR)**

(72) Inventeur : **Ledoux, Marc J.**
**11, rue d'Ussé**
**F-67000 Strasbourg (FR)**
Inventeur : **Guille, Jean-Louis**
**17 avenue des Vosges**
**F-67000 Strasbourg (FR)**
Inventeur : **Hantzer, Sylvain**
**Boulevard de la Marne**
**F-67000 Strasbourg (FR)**
Inventeur : **Dubots, Dominique**
**61 rue des Alpes Passy/Chedde**
**F-74190 Le Fayet (FR)**

(74) Mandataire : **Pascaud, Claude et al**
**PECHINEY 28, rue de Bonnel**
**F-69433 Lyon Cédex 3 (FR)**

## Description

## DOMAINE TECHNIQUE DE L'INVENTION

La présente invention concerne un procédé de production de carbure de silicium à grande surface spécifique, destiné notamment à servir de support de catalyseur dans la pétrochimie, et dans des réactions catalytiques à température élevée.

## ETAT DE LA TECHNIQUE

Les phases lourdes des pétroles ont l'énorme inconvénient de renfermer des composés riches en carbone et pauvres en hydrogène, responsables du cokage des catalyseurs, des dérivés azotés et soufrés pouvant être à l'origine de pollutions importantes et neutralisant les propriétés craquantes des catalyseurs, des métaux, enfin, altérant l'efficacité des catalyseurs en se fixant sur ceux-ci.

Pour pallier à ces inconvénients, les différentes coupes issues de la distillation sont soumises à une purification : c'est le rôle des hydrotraitements.

Dans ces réactions, les composés hydrocarbonés réagissent catalytiquement en présence d'hydrogène.

l'hydrocraquage conduit à des molécules plus petites

l'hydrogénation à l'augmentation du rapport H/C et à la saturation des composés aromatiques et oléfiniques

l'hydrodésulfuration (HDS),l'hydrodéazotation (HDN),l'hydrodésoxygénation (HDO) et l'hydrodémétallation (HDM) sont responsables de l'élimination des hétéroatomes et des métaux contenus dans ces hydrocarbures par rupture de la liaison C-S, C-N, C-O ou C-Me.

Les catalyseurs utilisés actuellement sont des catalyseurs à base de sulfure de molybdène et de sulfure de tungstène. Ils se composent d'une phase active, responsable de l'activité, supportée sur des matériaux appropriés assurant la stabilité de celle-ci.

Le précurseur de la phase active est constitué d'oxydes mixtes associant des éléments du groupe VIB (Mo, W) et des éléments du groupe VIII (Fe, Co, Ni). Ces oxydes sont sulfurés avant utilisation afin de leur assurer activité et stabilité requises.

Les catalyseurs sont déposés sur un support.

Le rôle du support est de maintenir la phase active dans un état de haute dispersion, grâce à une grande surface spécifique. Il est nécessaire que celui-ci soit de bonne qualité pour résister mécaniquement aux sévères conditions de température et de pression, et aux régénérations successives. Les principaux supports de catalyseurs utilisés dans l'industrie sont des alumines dont la texture peut être modifiée au cours de leur préparation ou des alumino-silicates amorphes ou parfois cristallins (zéolithes), dopés quelquefois avec d'autres oxydes.

Le catalyseur se désactive progressivement en fonction du temps sous l'action du coke et des métaux. Ainsi le traitement des phases lourdes pose d'énormes problèmes d'empoisonnement.

L'accumulation de coke est liée à la décomposition de composés aromatiques à haut poids moléculaire. Elle entraîne une baisse d'activité compensée dans un premier temps par une augmentation adéquate de température. Mais périodiquement, ce coke doit être brûlé et le catalyseur est recyclé. Le nombre de ces cycles n'est pas illimité car la phase active du catalyseur pénètre peu à peu dans le support et n'est donc plus accessible aux produits.

Lors de la réaction, les métaux, principalement le vanadium et le nickel, sous forme de complexes organométalliques et de porphyrines, se déposent sur le catalyseur, bouchant progressivement les pores de celui-ci. Aucune méthode de régénération n'est économiquement possible et le catalyseur doit être remplacé. Le recyclage des métaux de la phase active ainsi que du vanadium n'est pas, non plus, économiquement faisable ; la présence de l'ion aluminate après oxydation poussée du catalyseur empoisonné oblige le passage par une fusion alcaline, non applicable aux tonnages utilisés couramment (plusieurs dizaines de tonnes).

Le carbure de silicium pourrait constituer un support de catalyseur idéal. En effet, il résiste au double empoisonnement par le coke et par les métaux :

– par le coke :

Lors de la régénération du catalyseur, il y a formation de points chauds (combustion de grains de coke, très exothermique). En ces endroits, la phase active du catalyseur passe dans le support sous forme d'aluminates.

L'utilisation de SiC résoudrait cet inconvénient et augmenterait ainsi la durée de vie du catalyseur.

– par les métaux :

Après empoisonnement par les métaux le SiC, grâce à son inertie chimique, pourrait être traité et fournir ainsi une source intéressante de vanadium, (on ne sait pas actuellement extraire le vanadium d'un support en alumine) et permettre la récupération du molybdène et du cobalt par exemple.

Hors du domaine de la pétrochimie, il existe de nombreuses réactions catalytiques à température élevée dans lesquelles les supports actuels de catalyseur pourraient être, pour les mêmes raisons, remplacés par du carbure de silicium. Malheureusement, on ne sait pas produire, à ce jour, du carbure de silicium à grande surface spécifique, comparable à celle de l'alumine, c'est-à dire dans la gamme de plusieurs dizaines à plusieurs centaines de mètres carrés par gramme, et même au-delà si possible.

Dans la publication "Proceed, Brit, Ceram, Soc, Mai 1983, pages 1-15, P. KENNEDY et B. NORTH ont décrit un procédé expérimental de production de carbure de silicium à grain fin (grosseur moyenne des particules de 3 à 4,5 micromètres), par passage de vapeurs de monoxyde de silicium SiO sur un substrat carboné divisé, à une température de l'ordre de 1400 à 1500°C. Malheureusement, le carbure de silicium obtenu a une surface spécifique très basse, de l'ordre d'une dizaine de mètres carrés par gramme, ce qui exclut tout usage comme support de catalyseur. De même, le procédé décrit dans la demande de brevet GB-AA-2017667, qui consiste également à faire réagir SiO sur C entre 1340 et 1440°C sous une pression de l'ordre de $133.10^{-5}$ Pa ($10^{-5}$ mm Hg), conduit à une poudre de SiC de type $\beta$ ayant une surface spécifique de 15 $m^2.g^1$. Quant au procédé classique, dit procédé Acheson, (réaction de $SiO_2$ sur C à température élevée, très supérieure à 2000°C), on sait qu'il produit un carbure de silicium cristallisé à structure massive quine convient absolument pas comme support de catalyseur.

## OBJET DE L'INVENTION

Un premier objet de la présente invention est un procédé de production de grains fins de carbure de silicium, constitués par un aggloromérat de grains submicroniques ayant une surface spécifique au moins égale à 100 $m^2.g^1$, destinés notamment à servir de support de catalyseurs pour la pétrochimie, et pour des réactions catalytiques à température élevée (jusqu'à 1000°C), ce procédé consistant à :

– génèrer des vapeurs de SiO dans une première zone de réaction, par chauffage d'un mélange $SiO_2$ + Si, à une température comprise entre 1100 et 1400°C, sous une pression comprise entre 0,1 et 1,5 hPa

– mettre en contact, dans une seconde zone de réaction, les vapeurs de SiO avec du carbone réactif, à l'état divisé, de surface spécifique au moins égale à 200 $m^2.g^{-1}$, à une température comprise entre 1100 et 1400°C.

De préférence, la température de génération de SiO est comprise entre 1200 et 1300°C, et la température de réaction de SiO sur C est comprise entre 1100 et 1200°C.

Un second objet de l'invention est l'application du carbure de silicium à grande surface spécifique comme support de catalyseurs pour de nombreuses réactions chimiques à température élevée, supérieure à 500°C et pouvant être comprise entre 650 et 1000°C, s'effectuant en présence d'un catalyseur. Parmi ces applications, on peut citer :

1°) Les pots d'échappement des moteurs à combustion interne, destinés à convertir le monoxyde de carbone et les éventuels hydrocarbures imbrûlés en dioxyde de carbone et eau, ainsi que pour convertir les oxydes d'azote en $NO_2$, et pour lesquels on utilise actuellement de l'alumine activée avec des sels de rhodium et/ou de platine.

Le carbure de silicium à surface spécifique élevée (> 100 $m^2/g$) peut être activé par imprégnation avec un sel de rhodium (tel que le chlorure) et/ou de platine (sel d'acide hexachloroplatinique) à une concentration égale et même inférieure (à efficacité égale) à celles que l'on met en oeuvre dans le cas de l'alumine.

Outre une diminution du prix de revient, on constate une durée de vie utile sensiblement accrue des pots catalytiques utilisant le carbure de silicium selon l'invention comme support de catalyseur. En particulier, de tels pots sont insensibles à des élévations brutales de la température des gaz d'échappement.

2°) Les catalyseurs dits "d'oxydation ménagée" des hydrocarbures à faible masse moléculaire tels que le méthane, qui sont souvent à base d'oxyde de lithium ou de manganèse, qui permettent d'obtenir la conversion en hydrocarbures à chaîne carbonée longue et masse moléculaire relativement élevée, à une température de l'ordre de 650 à 800°C. Dans cette application, les catalyseurs supportés par de l'alumine perdent rapidement leur efficacité par suite d'une diminution rapide de la surface spécifique de l'alumine. Dans cette application particulière, le carbure de silicium résiste remarquablement ; des essais ont montré que la surface spécifique d'un échantillon, initialement égale à 120 $m^2/g$ était encore égale à 60 $m^2/g$ après chauffage prolongé à 1000°C. Dans le cas d'un carbure de silicium dopé à l'uranium, la surface initiale de 200 $m^2/g$ est encore de 120 à 130 $m^2/g$ après chauffage prolongé à 1000°C.

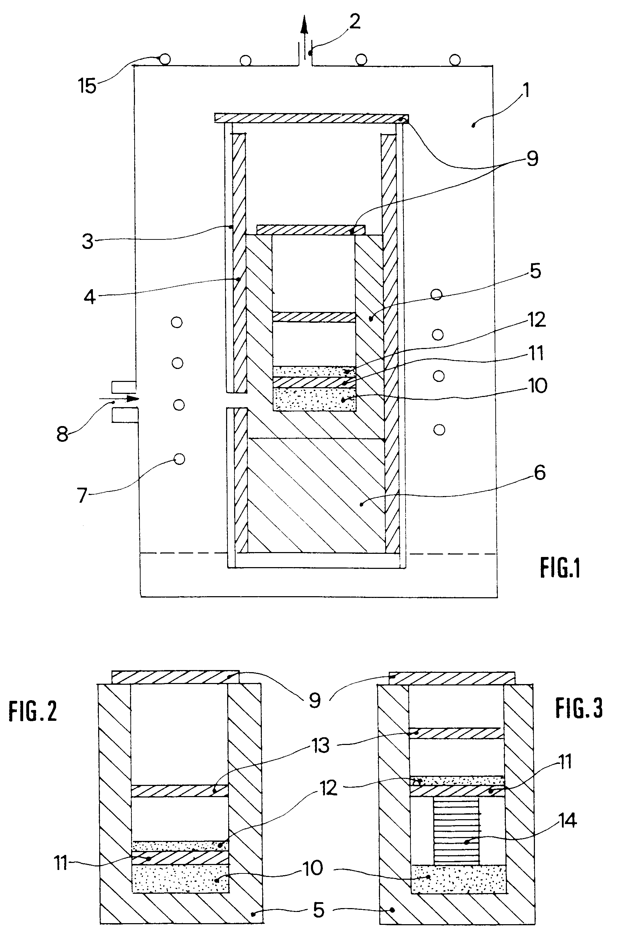

3°) En pétrochimie, les réactions d'hydrotraitement (hydrodésulfuration, hydrodémétallation...), utilisant un catalyseur mixte tel que cobalt-molybdène, habituellement supporté par de l'alumine, de la silice ou du charbon actif : leur remplacement par du carbure de silicium à grande surface spécifique présente de nombreux avantages, ainsi qu'on l'a précédemment exposé. Les figures 1 à 3 montrent l'appareillage utilisé pour la mise en oeuvre de l'invention.

La figure 1 montre l'ensemble de l'appareillage.

Les figures 2 et 3 montrent deux configurations possibles du creuset réactionnel.

## A - Description du réacteur

Le réacteur, dans lequel est effectuée la préparation du SiC à grande surface spécifique comporte une enceinte étanche 1 dans laquelle on peut faire le vide par une pompe (non représentée) reliée à l'ajutage 2. Dans l'enceinte 1 on a placé un tube en silice 3 revêtu intérieurement de feutre de carbone 4, agissant comme isolant et séparateur.

A l'intérieur du tube 3 est disposé un creuset de graphite 5 supporté par un bloc de graphite 6. Le creuset 5 est chauffé par induction, au moyen de l'enroulement 7. Une fenêtre de visée 8 permet la mesure de température par pyrométrie optique. Le creuset 5 est recouvert d'une plaque en feutre de carbone 9, ainsi que la partie supérieure du tube du silice 3, de façon à éviter que le SiO en excès n'aille se condenser sur la paroi interne du four. Le couvercle comporte un circuit 15 de refroidissement par circulation d'eau.

Le mélange $SiO_2$ + Si (10) est placé dans le fond du creuset en graphite 5 ; et le carbone, sur lequel va s'effectuer la réaction SiO + 2C --> SiC + CO, est placé au-dessus.

Il peut être disposé selon deux configurations :

Selon la figure 2, le mélange 10 ($SiO_2$ + Si) est recouvert d'une plaque 11 de feutre de carbone destinée à séparer la zone de génération de SiO de la zone de formation de SiC, puis d'une couche 12 de poudre de carbone réactif. Au-dessus de cette couche 12, et à une certaine distance (par exemple vers la mi-hauteur du creuset), on peut rajouter une plaque supplémentaire 13 de feutre de carbone, toujours dans le même but de retenir un excès éventuel de SiO.

Selon la figure 3, le mélange précurseur 10 ($SiO_2$ + Si) est séparé de la zone de réaction SiO+C par une entretoise (14) qui peut être constituée par exemple, par une feuille de feutre de graphite, de largeur h, enroulée en spirale. Cette largeur h, qui détermine l'écartement entre la zone de génération de SiO et la zone de réaction SiO+C est modifiable en tant que paramètre de la réaction. Cette séparation est surmontée par une feuille de feutre de carbone 11 et une couche de poudre de carbone réactif 12. En faisant varier h, on augmente la cinétique de génération de SiO sans accroître la température de formation de SiC.

## B - Description du procédé

Le mélange 10 précurseur $SiO_2$ + Si est chauffé sous pression réduite -de l'ordre de 0,1 à 1,5 hPa à une température au plus égale à 1400°C, et, de préférence, comprise entre 1100° et 1400°C.

Les vapeurs de SiO générées traversent le séparateur en feutre de carbone 11, puis la couche de poudre de carbone réactif 12, dans laquelle se produit la réaction SiO + 2C ---> SiC + CO.

Le choix du "carbone réactif" influence sensiblement le déroulement de la réaction.

On a utilisé :

– des pastilles de graphite (obtenues par agglomération de poudre).

– du charbon actif pulvérulent (obtenu par broyage de granulés tamisés pour obtenir une granulométrie de 0,250 à 0,425 mm, et ayant une surface spécifique de l'ordre de 1150 m²/g. (Activated Charcoal fourni par la Société FLUKA)

– du charbon actif dopé par un métal choisi parmi l'uranium, le cérium, le titane, le zirconium, le hafnium et les lanthanides par imprégnation en solution, par exemple, à partir de composés acétyl-acétonates, puis carburé sous argon, 4 heures à 450°C. Le dopage est de l'ordre de 4 à 4,5 % en poids du métal choisi. La surface spécifique du carbone est alors quelque peu réduite, mais le taux de transformation est sensiblement augmenté.

Les paramètres ont été :

– la quantité de mélange précurseur $SiO_2$ + Si

– la température

– la durée

. Quantité de précurseur :

on a fixé un rapport de 4 parties en poids de précurseur pour 2,5 parties en poids de carbone. On travaille ainsi en excès de SiO, ce qui assure la reproductibilité des conditions opératoires. Le mélange $SiO_2$+Si est de préférence équimoléculaire, mais il n'y a pas d'inconvénient à opérer avec des mélanges s'écartant quelque peu de la stoechiométrie.

. Température :

La structure est d'autant plus fine que la réaction de SiO sur le carbone a lieu à basse température.

A 1400°C, on obtient des particules ayant une dimension moyenne de l'ordre de 0,2 micromètres dans la configuration de la figure 2, et encore plus fine dans la configuration de la figure 3, pour une hauteur h de séparation des deux compartiments (génération de SiO et réaction de SiO sur C) égale à 40 mm.

A 1250°C, on obtient dans les deux configuration, des particules plus fines (< 0,1 um), ainsi que quelques trichites. On a constaté que l'on pouvait opérer à une température aussi basse que 1100°C.

Si l'on effectue, lors de la montée en température, un palier de dégazage, on constate que la surface spécifique du SiC obtenu est augmentée.

Ce dégazage peut être effectué à la température ambiante (par exemple pendant 45 min) (30 Min à 1 heure), mais il est particulièrement efficace s'il est effectué vers 875°C (entre 850 et 900°C), pendant une durée pouvant aller de 1 à 4 heures.

. Durée

La durée de maintien à la température de réaction (1100°C/1400°C) est comprise, de préférence entre 4 et 7 heures, en raison de la lenteur de la cinétique dans cette gamme de température.

. Traitement final

De préférence, le carbure de silicium obtenu est soumis à une post-calcination à l'air, d'une durée qui peut être comprise entre 1/2 et 2 heures, à une température de l'ordre de 600 à 800°C, qui a pour but de détruire les résidus de carbone que peut encore contenir la masse réactionnelle et qui a pour effet d'augmenter la surface spécifique de 5 à 10 % environ.

C - **Caractérisation du SiC obtenu**

Dans les différents cas, on recueille le substrat carboné recouvert de SiC du type cristallisé dans un réseau cubique à faces centrées. Le SiC a une couleur qui peut aller du bleu foncé au gris souris ou au vert d'eau, plus ou moins foncé.

En vue d'éliminer le substrat carboné, qui pourrait fausser les mesures de surface spécifique, on procède à une calcination à l'air, à une température de 600 à 800°C pendant 1 à 2 heures (par exemple). Le carbure de silicium finalement obtenu se présente sous forme d'agglomérats de grains submicroniques.

Pour le caractériser, on procède aux observations et mesures suivantes :

. Perte au feu (lors de la calcination du substrat carboné) ce qui permet de connaître le rendement de transformation.

. Caractérisation radiocristallographique, par diffraction de rayons X dans une chambre Debye-Scherrer.

. Observation au microscope optique et au microscope électronique à balayage.

. Mesure de la surface spécifique B.E.T., effectuée selon la technique habituelle par absorption d'un gaz.

. Examen chimique

Sur certains échantillons, on a effectué des lavages à l'acide fluorhydrique, pour détecter la formation éventuelle de $SiO_2$, et procédé à des dosages de carbone résiduel.

**RESULTATS**

En optimisant les conditions de réaction, on a obtenu des surfaces spécifiques atteignant jusqu'à 400 m²/g, qui sont à comparer avec la surface du SiC obtenu dans la publication citée au titre de l'art antérieur (1 m²/g), et avec la surface de 200m²/g des alumines utilisées habituellement comme support de catalyseurs en pétrochimie.

Le tableau I résume les conditions dans lesquelles ont été effectués les essais conduisant aux surfaces spécifiques les plus élevées.

**TABLEAU I**

| N° d'essai | 1 | 2 | 3 | 4 |
|---|---|---|---|---|
| Température de réaction en °C | 1225 | 1250 | 1250 | 1250 |
| Dégazage Durée/T°C | 4h30 875 | 45 min 20 | 2 h 875 | 1 h 875 |
| Nature du Carbone Dopage | Charbon Actif | Charbon Actif | Charbon Actif 4% U | Charbon Actif |
| Aspect du SiC obtenu | Bleu foncé | Gris foncé | gris clair | Gris foncé |
| Perte par calcination % | 28 | 21 | 40 | 18 |
| Dimensions moyennes des grains um | 0,2 | 0,1 | 0,1 | 0,1 |
| Surface spécifique m$^2$/g | 196 | 141 | 363 | 121 |

## APPLICATION A LA PETROCHIMIE du CARBURE de SILICIUM à HAUTE SURFACE SPECIFIQUE

De façon à vérifier la qualité des catalyseurs sur substrat de SiC à grande surface spécifique, selon l'invention, on a réalisé un lot de catalyseurs mixtes au Cobalt-Molybdène, destinés à des réactions d'hydro-traitement HDS en phase soufrée (hydro-désulfuration) le support étant du SiC de granulométrie 0,250/0,425 mm et de surface spécifique 170m$^2$/g, que l'on imprègne, par les méthodes connues, appliquées aux catalyseurs classiques sur charbon actif ou silice ou alumine.

Le sel de départ pour l'imprégnation du Mo est de l'heptamolybdate d'ammonium de formule :

$$Mo_7(NH_4)_6O_{24}$$

La quantité de sel, qui est l'élément actif, est dissoute dans le solvant (eau), dont le volume est de l'ordre du volume poreux de la masse de support utilisé.

Le catalyseur est préparé en versant la solution sur le support. Le catalyseur ainsi imprégné est laissé au repos pendant deux heures à température ambiante, puis étuvé à 120°C pendant une nuit et sulfuré directement in situ, et enfin calciné à l'air dans un four à 500°C pendant deux heures (dans le cas du traitement type silice ou alumine uniquement).

On recommence la même opération pour imprégner le cobalt, le sel de départ est alors du nitrate de cobalt de formule : $Co(NO_3)_2, 6H_2O$.

Pour calculer la quantité de sel de nitrate de cobalt, on doit tenir compte d'un rapport atomique de 0.3, entre Mo et Co qui a été vérifié par analyse par activation neutronique. Ce rapport correspond au maximum de synergie qui existe entre Co et Mo.

On a effectué une série de tests comparatifs, utilisant, comme support de ce même catalyseur, du Charbon actif, de la silice, de l'alumine, du SiC à faible surface spécifique (20 m²/g), du SiC selon l'invention (170m²/g). On a pris, comme critère d'efficacité la vitesse d'hydrodésulfuration (HDS) du thiophène transformé par gramme de catalyseur, et par seconde ou par gramme de catalyseur par seconde et par mètre carré.

Les résultats figurent sur le tableau II.

## TABLEAU II

| Nature du support de catalyseur | Vitesse de réaction d'hydro-désufuration du thiophène | |
|---|---|---|
| | mol/g.s | mole/g.s.m² |
| Charbon actif 1150 $m^2.g^{-1}$ | 20 000 | 17 |
| Silice 550 $m^2.g^{-1}$ | 2 480 | 4,5 |
| Alumine 220 $m^2.g^{-1}$ | 15 000 | 75 |
| SiC 20 $m^2.g^{-1}$ | 200 | 7 |
| SiC 170 $m^2.g^{-1}$ | 2 630 | 15 |
| SiC (5,8 % U) 363 $m^2.g^{-1}$ | 8 300 | 23 |

Ces résultats peuvent être considérés comme très satisfaisants, surtout si l'on tient compte du fait que le catalyseur sur support de SiC peut être aisément régénéré et récupéré en fin de vie.

## APPLICATIONS DU CARBURE DE SILICIUM A HAUTE SURFACE SPECIFIQUE A DES REACTIONS CATALYTIQUES A TEMPERATURE ELEVEE : INFLUENCE DU DOPAGE DU CARBONE ACTIF

### A- Dopage à l'uranium

Le carbone actif, à grande surface spécifique a été dopé à l'uranium par imprégnation au moyen d'une solution alcoolique d'acétylacétate d'uranyle, de façon à obtenir une concentration pondérale en uranium (dans le carbone actif initial) de 8 à 15%. Le carbone ainsi traité a été calciné sous argon à 500°C puis introduit dans le réacteur, et mis en réaction avec le monoxyde de silicium, selon l'invention. On a ensuite mesuré la surface spécifique du carbure de silicium ainsi obtenu, avant calcination et après calcination à l'air de 2 heures à 1000°C. Les résultats sont les suivants:

| % U en poids | 0 | 8.5 | 9.8 | 15 |
|---|---|---|---|---|
| $m^2/g$ avant calcination | 197 | 425 | 410 | 279 |
| $m^2/g$ après 2h à 1000°C | 59 | 109 | 131 | 76 |

Il apparaît que l'optimum de concentration en uranium dans le charbon actif se situe vers 8 à 10% en poids, ce qui correspond à une teneur réelle dans le carbure de silicium de l'ordre de 13 à 14% en poids. L'examen aux rayons X montre que l'uranium se trouve, dans le carbure de silicium, sous forme de $U_3O_7$ avant calcination et sous forme de $U_3O_8$ après calcination de 2h à 1000°C.

**B - Dopage au Cérium**

De la même façon, on a procédé au dopage au Cérium du carbone actif, par imprégnation avec des sels de cérium solubles dans l'eau tels que le nitrate $Ce(NO_3)_2$, $6H_2O$ ou le nitrate ammoniacal $(NH_4)_2 Ce (NO_3)_6$.

Les résultats sont les suivants

| % Ce dans le C actif | 3 | 5 | 5 | 5 |
|---|---|---|---|---|
| (en poids) | NITRATE | AMMONIACAL | | NITRATE |
| $m^2$/g avant calcination | 303 | 292 | 320 | 376 |
| $m^2$/g après 2h à 1000°C | 73 | 134 | 141 | 94 |

On constate que la nature du sel de cérium a une certaine influence sur le résultat final, à concentration égale en cérium, probablement par des différences de pénétration de la solution dans les pores du carbone actif. Les deux essais avec du nitrate ammoniacal correspondent à de légères modifications des paramètres de la réaction SiO sur C produisant le SiC. On constate également que le dopage au cérium est au moins aussi efficace que le dopage à l'uranium. D'autres dopants peuvent être utilisés, et en particulier des sels de titane, zirconium, hafnium, et lanthanides.

EXEMPLE D'APPLICATION

L'invention a été mise en oeuvre dans des conditions simulant le fonctionnement de pots d'échappement à catalyse pour moteurs à combustion interne dans des conditions conformes aux normes européennes en cours d'élaboration.

On a préparé 4 dispositifs simulant un pot catalytique, le catalyseur étant un mélange platine-rhodium, la concentration en phase active étant de 0,2% de Pt et de 0,02% en poids de Rh.

Les 4 catalyseurs ont été respectivement déposés par les procédés classiques, sur :
 – de l'alumine active à 235 m2/g
 – du SiC (selon l'invention) non calciné à 125 m2/g
 – du SiC calciné à 800°C, à 30 m2/g
 – du Sic calciné à 1000°C à 18 m2/g On a envoyé sur ces catalyseurs un gaz simulant un gaz d'échappement de moteur, avec un débit, par minute, de 58,5 cm$^3$ de CO + $N_2$ , 350 ppm de $C_3H_8$ , 450 ppm de NO.

On a mesuré l'efficacité de ces 4 catalyseurs du point de vue de la conversion de CO en $CO_2$, et des sous-oxydes d'azote en $NO_2$ et de l'oxydation des imbrûlés, en fonction de la température.

Les résultats sont donnés sur le tableau ci-après. On constate que le SiC calciné à 800°C a une efficacité tout à fait comparable à celle de l'alumine. Il faut ajouter que le SiC présente en outre une très grande supériorité sur l'alumine, qui est la facilité de récupération du catalyseur, qui pose au contraire des problèmes très difficiles dans le cas de l'alumine.

| Température T à x% de conversion (°C) | GAZ CO | NOx | C3H8 |
|---|---|---|---|
| T-10% Réf.Al$_2$O$_3$ | 211°C | 231°C | 251°C |
| SiC avant calcination | 252 | 249 | 304 |
| SiC après calcination 800°C | 231 | 215 | 275 |
| SiC après calcination 1000°C | 304 | 305 | 348 |
| (calciné à l'air, 15H) | | | |
| T-25% Réf.Al$_2$O$_3$ | 230 | 244 | 264 |
| SiC avant calcination | 271 | 269 | 307 |
| SiC après calcination 800°C | 244 | 232 | 280 |
| SiC après calcination 1000°C | 322 | 322 | 362 |
| (calciné à l'air, 15H) | | | |
| T-50% Réf.Al$_2$O$_3$ | 245 | 252 | 350 |
| SiC avant calcination | 284 | 282 | 347 |
| SiC après calcination 800°C | 259 | 251 | 385 |
| SiC après calcination 1000°C | 338 | 336 | 380 |
| (calciné à l'air, 15H) | | | |
| T-75% Réf.Al$_2$O$_3$ | 257 | 265 | 394 |
| SiC avant calcination | 296 | 292 | 412 |
| SiC après calcination 800°C | 266 | 265 | 462 |
| SiC après calcination 1000°C | 352 | 349 | 404 |
| (calciné à l'air, 15H) | | | |
| T-90% Réf.Al$_2$O$_3$ | 270 | 279 | 419 |
| SiC avant calcination | 304 | 301 | 450 |
| SiC après calcination 800°C | 270 | 272 | 488 |
| SiC après calcination 1000°C | 364 | 360 | 429 |
| (calciné à l'air 15H) | | | |

| | | TAUX DE CONVERSION % | | |
|---|---|---|---|---|
| Efficacité en % | Surf.Spéc. | CO | NOx | C3H8 |
| Référence (Al$_2$O$_3$) | 235m$^2$/g | 71.0 | 71.0 | 58.7 |
| SiC avant calcination | 125 | 62,1 | 63,9 | 54,4 |
| Sic.après calcination 800°C | 30 | 69.7 | 73.1 | 52.0 |

EP 0 313 480 B1

On constate que l'efficacité du catalyseur déposé sur SiC calciné à 800°C, à 30 m$^2$/g, est sensiblement égale à celle du catalyseur sur alumine en ce qui concerne CO et NOx, et à peine inférieure en ce qui concerne les imbrûlés.

Ces résultats peuvent encore être améliorés en optimisant le dopage (à l'uranium, au cérium ou autre) en fonction du but à atteindre, car il est facile, par la mise en oeuvre de l'invention, d'utiliser comme support de la phase active du catalyseur, du SiC conservant, à 800°C, une surface spécifique supérieure à 300 m$^2$/g, et, à 1000°C, encore supérieure à 100 m$^2$/g.

## Revendications

1. Procédé de production de grains fins de carbure de silicium, constitués par un aggloméré de grains submicroniques ayant une surface spécifique au moins égale à 100 m$^2$.g$^{-1}$, destinés notamment à servir de support de catalyseurs pour la pétrochimie, et pour des réactions catalytiques à température élevée pouvant atteindre 1000°C, ce procédé consistant à :
   – générer des vapeurs de SiO dans une première zone de réaction, par chauffage d'un mélange SiO$_2$+Si, à une température comprise entre 1100 et 1400°C, sous une pression comprise entre 0,1 et 1,5 hPa;
   – mettre en contact, dans une seconde zone de réaction, les vapeurs de SiO avec du carbone réactif, à l'état divisé, de surface spécifique au moins égale à 200 m$^2$.g$^{-1}$, à une température comprise entre 1100 et 1400°C.

2. Procédé selon revendication 1, caractérisé en ce que la température de génération de SiO est comprise de préférence entre 1200 et 1300°C.

3. Procédé, selon revendication 1, caractérisé en ce que la température de réaction de SiO sur C est comprise, de préférence, entre 1100 et 1200°C.

4. Procédé, selon l'une quelconque des revendications 1 à 3, caractérisé en ce que le charbon réactif est dopé par une addition de 4 à 10% en poids d'un élément métallique choisi parmi l'uranium, le cérium, le titane, le zirconium, le hafnium et les lanthanides.

5. Procédé selon l'une quelconque des revendications 1 à 4, caractérisé en ce que, lors de la montée à la température de réaction (1100-1400°C), on effectue un palier de dégazage.

6. Procédé, selon revendication 5, caractérisé en ce que le palier de dégazage est effectué à la température ambiante, pendant une durée de 30 min à 1 heure.

7. Procédé, selon revendication 5, caractérisé en ce que le palier est effectué à une température comprise entre 850 et 900°C, pendant une durée de 1h à 4 heures.

8. Procédé, selon l'une quelconque des revendications 1 à 7, caractérisé en ce que le carbure de silicium obtenu est soumis à une post-calcination à l'air à une température de l'ordre de 600 à 800°C, pendant une durée de l'ordre de 1/2 à 2 heures.

9. Application du carbure de silicium à surface spécifique au moins égale à 100 m$^2$.g$^{-1}$ à la mise en oeuvre de réactions catalytiques à température élevée, supérieure à 500°C et pouvant être comprise entre 650 et 1000°C, et notamment : l'épuration catalytique des gaz d'échappement des moteurs à combustion interne, l'oxydation ménagée des hydrocarbures à faible masse moléculaire, notamment le méthane, en hydrocarbures à masse moléculaire plus élevée et chaîne carbonée plus longue, et les réactions d'hydrotraitement, en pétrochimie.

## Patentansprüche

1. Verfahren zur Herstellung von feinen Siliciumcarbidkörnern, die aus einem Agglomerat von Submikronkörnern mit einer spezifischen Oberfläche von wenigstens 100 m$^2$. g$^{-1}$ bestehen und insbesondere zum Dienen als Träger von Katalysatoren für die Petrochemie und für katalytische Reaktionen bei bis zu 1000 °C reichender hoher Temperatur bestimmt sind, welches Verfahren darin besteht:
   – in einer ersten Reaktionszone SiO-Dämpfe durch Erhitzen eines Gemisches von SiO$_2$ + Si auf eine Temperatur im Bereich von 1100 bis 1400 °C unter einem Druck im Bereich von 0,1 bis 1,5 hPa zu erzeugen; und
   – in einer zweiten Reaktionszone die SiO-Dämpfe mit reaktivem Kohlenstoff im unterteilten Zustand mit einer spezifischen Oberfläche von wenigstens 200 m$^2$ . g$^{-1}$ bei einer Temperatur im Bereich von 1100 bis 1400 °C in Kontakt zu bringen.

2. Verfahren nach Anspruch 1, dadurch gekennzeichnet, daß die SiO-Erzeugungstemperatur vorzugsweise im Bereich von 1200 bis 1300 °C liegt.

3. Verfahren nach Anspruch 1, dadurch gekennzeichnet, daß die Temperatur der Reaktion von SiO mit C vorzugsweise im Bereich von 1100 bis 1200 °C liegt.

4. Verfahren nach irgendeinem der Ansprüche 1 bis 3, dadurch gekennzeichnet, daß der reaktive Kohlenstoff durch einen Zusatz von 4 bis 10 Gew.% eines unter Uran, Cer, Titan, Zirkonium, Hafnium und den Lanthaniden gewählten metallischen Elements dotiert ist.

5. Verfahren nach irgendeinem der Ansprüche 1 bis 4, dadurch gekennzeichnet, daß man während des Anstiegs auf die Reaktionstemperatur (1100 - 1400 °C) eine Entgasungsstufe vorsieht.

6. Verfahren nach Anspruch 5, dadurch gekennzeichnet, daß die Entgasungsstufe bei der Umgebungstemperatur während einer Dauer von 30 min bis 1 Stunde erfolgt.

7. Verfahren nach Anspruch 5, dadurch gekennzeichnet, daß die Stufe im Bereich vom 850 bis 900 °C während einer Dauer von 1 bis 4 Stunden erfolgt.

8. Verfahren nach irgendeinem der Ansprüche 1 bis 7, dadurch gekennzeichnet, daß das erhaltene Siliciumcarbid einer Nachcalcinierung an der Luft bei einer Temperatur der Größenordnung von 600 bis 800 °C während einer Dauer der Größenordnung von 1/2 bis 2 Stunden unterworfen wird.

9. Verwendung des Siliciumcarbids mit spezifischer Oberfläche von wenigstens $100 \ m^2 . g^{-1}$ zur Durchführung katalytischer Reaktionen bei hoher Temperatur über 500 °C, die im Bereich von 650 bis 1000 °C liegen kann, insbesondere: die katalytische Reinigung der Abgase der Verbrennungsmotoren, die gelenkte Oxidation der Kohlenwasserstoffe niedriger molarer Masse, besonders des Methans, zu Kohlenwasserstoffen höherer molarer Masse und längerer Kohlenstoffkette und die Hydrofinierreaktionen in der Petrochemie.

## Claims

1. A process for the production of fine grains of silicon carbide which are formed by an agglomerate of submicronic grains having a specific surface area that is at least $100 \ m^2.g^{-1}$, which are intended in particular to serve as a carrier for catalysts for petrochemistry, and for catalytic reactions at elevated temperature which can attain 1000°C, the process comprising
   – generating vapours of SiO in a first reaction zone by heating a mixture $SiO_2$ +Si at a temperature of between 1100 and 1400°C, under a pressure of between 0.1 and 1.5 hPa; and
   – in a second reaction zone, contacting the SiO vapours with reactive carbon in the divided state with a specific surface area that is at least equal to $200 \ m^2. g^{-1}$ at a temperature of between 1100 and 1400°C.

2. A process according to claim 1 characterised in that the SiO generation temperature is preferably between 1200 and 1300°C.

3. A process according to claim 1 characterised in that the temperature of the reaction of SiO on C is preferably between 1100 and 1200°C.

4. A process according to any one of claims 1 to 3 characterised in that the reactive carbon is doped by an addition of from 4 to 10% by weight of a metallic element selected from uranium, cerium, titanium, zirconium, hafnium and lanthanides.

5. A process according to any one of claims 1 to 4 characterised in that, in the phase involving the rise to the reaction temperature (1100 to 1400°C), a degassing stage is effected.

6. A process according to claim 5 characterised in that the degassing stage is effected at ambient temperature for a period of from 30 minutes to 1 hour.

7. A process according to claim 5 characterised in that the stage is effected at a temperature of between 850 and 900°C for a period of from 1 hour to 4 hows.

8. A process according to any one of claims 1 to 7 characterised in that the silicon carbide obtained is subjected to a post-roasting operation in air at a temperature of the order of 600 to 800°C for a period of the order of from 1/2 to 2 hours .

9. Use of silicon carbide with a specific surface area that is at least equal to $100 \ m^2.g^{-1}$ for carrying out catalytic reactions at elevated temperature of higher than 500°C and which may be between 650 and 1000°C and in particular: catalytic purification of the exhaust gases of internal combustion engines, controlled oxidation of hydrocarbons of low molecular mass, in particular methane, into hydrocarbons of higher molecular mass and longer carbon chain, and hydro-treatment reactions in petrochemistry.

**FIG.1**

**FIG.2**

**FIG.3**